(19) Europäisches Patentamt / European Patent Office / Office européen des brevets

(11) **EP 2 941 047 B1**

(12) **EUROPEAN PATENT SPECIFICATION**

(45) Date of publication and mention
of the grant of the patent:
**15.07.2020  Bulletin 2020/29**

(51) Int Cl.:
**H04W 36/00** *(2009.01)*     **H04W 36/04** *(2009.01)*

(21) Application number: **14305653.9**

(22) Date of filing: **02.05.2014**

(54) **Using a cell individual offset to bias user equipment towards a cell and provide cell range expansion**

Verwendung eines individuellen Zellenoffsets zur Beeinflussung eines Benutzergeräts in Richtung einer Zelle und zur Bereitstellung von Zellenbereichserweiterung

Utilisation d'un décalage de cellule individuelle pour solliciter un équipement utilisateur vers une cellule et assurer l'expansion de plage de cellule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2015  Bulletin 2015/45**

(73) Proprietor: **Alcatel Lucent**
**91620 Nozay (FR)**

(72) Inventors:
• **Puddle, Nicola**
**Swindon, Wiltshire SN5 7DJ (GB)**
• **Wong, Shin Horng**
**Swindon, Wiltshire SN5 7DJ (GB)**
• **Brend, Graham**
**Swindon, Wiltshire SN5 7DJ (GB)**
• **Warner, Martin**
**Swindon, Wiltshire SN5 7DJ (GB)**

(74) Representative: **Mills, Julia et al**
**Script IP Limited**
**18 Bridge Street**
**Frome Somerset BA11 1BB (GB)**

(56) References cited:
**WO-A1-2012/142876**

• **KATSUNORI KIKUCHI ET AL: "Proposal of adaptive control CRE in heterogeneous networks", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 910-914, XP032273106, ISSN: 2166-9570, DOI: 10.1109/PIMRC.2012.6362914 ISBN: 978-1-4673-2566-0**
• **ALCATEL-LUCENT: "Cell Range Expansion", 3GPP DRAFT; R2-140615 CRE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050737752, Retrieved from the Internet: URL:http://www.3gpp.org/ftp/Meetings_3GPP_SYNC/RAN/RAN2/Docs/ [retrieved on 2014-02-09]**
• **"3rd Generation Partnership Project; Technical Specification Group Radio Access Network; Study on UMTS heterogeneous networks (Release 12)", 3GPP STANDARD; 3GPP TR 25.800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 20 September 2013 (2013-09-20), pages 1-131, XP050712697, [retrieved on 2013-09-20]**

**(Cont. next page)**

- **Qualcomm Incorporated: "Configuration of CIO based on UE receiver capability", 3GPP TSG RAN WG1 #76bis, R1-141712, 22 March 2014 (2014-03-22), pages 1-2, XP002728601, Retrieved from the Internet: URL:http://www.3gpp.org/ftp/tsg_ran/WG1_RL 1/TSGR1_76b/Docs/ [retrieved on 2014-08-18]**
- **Alcatel-Lucent: "CIO configuration in HetNet", 3GPP TSG RAN WG1#77, R1-142035, 10 May 2014 (2014-05-10), pages 1-2, XP002728602, Retrieved from the Internet: URL:http://www.3gpp.org/ftp/tsg_ran/WG1_RL 1/TSGR1_77/Docs/ [retrieved on 2014-08-18]**
- **ALCATEL-LUCENT: "Cell Range Expansion", 3GPP DRAFT; R2-140615 CRE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050791929, Retrieved from the Internet: URL:http://www.3gpp.org/ftp/Meetings_3GPP_ SYNC/RAN2/Docs/ [retrieved on 2014-02-09]**

**Description**

FIELD OF THE INVENTION

Aspects and embodiments described provide a wireless telecommunications user equipment cell selection bias method, a user equipment and a computer program product operable to perform this method.

BACKGROUND

Wireless telecommunication networks are known. In such networks, network connectible devices or user equipment (for example, mobile telephones or tablets) are operable to communicate with base stations provided by network operators. In known wireless telecommunication networks, radio coverage is provided to network connectible devices in geographical areas typically known as cells. Abase station is located in each cell to provide radio coverage. Network connectible devices in each cell are operable to receive information and data from the base station and to transmit data and information to the base station.

Network connectible devices roam through a wireless communications network. Base stations are provided which support areas of radio coverage as described above. A number of those base stations are provided and are distributed geographically in order to provide a wide area of coverage to network connectible devices.

When network connectible devices such as user equipment are within an area served by a base station, communications may be established between user equipment and a base station using associated radio links. Traditional base stations provide coverage in relatively large geographical areas and such base stations are often referred to as macro base stations and support macro cells of radio coverage. It is possible to provide a heterogeneous network (HetNet) where smaller sized cells are provided within macro cells. Such smaller sized cells can be referred to as micro cells, pico cells or femto cells. One way to establish a small cell is to provide a small cell base station or "low power node" (LPN) which is operable to provide radio coverage having relatively limited range within the coverage area of the macro cell. The transmission power of a low power node is relatively low and each low power node tends to support small cells which provide a small coverage area compared to that of a macro cell.

In such heterogeneous networks cell range expansion (CRE) can be used to encourage user equipment to connect to low power nodes. Cell range expansion is a technique according to which handover of user equipment operating in, for example, a macro cell can be biased towards a low power node by setting a bias, known as a cell individual offset (CIO) for the low power node. According to such a technique, user equipment operates to measure received signal strength from a low power node and then applies a bias, essentially making the received signal strength appear greater than it actually is. Such a technique acts to essentially broaden a region of coverage supported by a low power node without actively increasing the transmit power of that low power node.

Although user equipment in the expanded or CRE region are likely to suffer from high interference from the macro cell, it is possible that additional capacity offered by the low power node can lead to overall system throughput gain. Furthermore, different user equipment have different characteristics and where the increased interference due to switching early to a low power node may be acceptable to some user equipment, for others it may not be.

Accordingly, using cell range expansion techniques to bias user equipment towards selection of low power nodes may offer advantages, but both unexpected and detrimental consequences may occur. It is desired to provide techniques which may be used to address those consequences.

"Proposal of Adaptive Control CRE in Heterogeneous Networks", by Katsunori Kikucchi et al., 2012 IEEE 23rd International Symposium on personal, Indoor and Mobile Radio Communications pages 910 - 914, discloses an adaptive cell range expansion (CRE) technique in which one of two cell selection offsets CSOs are applied to the user equipment in dependence upon a measured signal to interfere and noise power ratio SINR at the UE when compared to a threshold SINR.

Alcatel-Lucent "Cell Range Expansion", 3GPP Draft R2-140615, 9 February 2014 discloses a way of updating CIO values for a cell based on SINR values collected from UEs. An updated CIO value is calculated at the network node and transmitted to the UEs.

SUMMARY

The present invention is defined by the appended independent claims.

Further embodiments are defined by the appended dependent claims.

A related technique provides a wireless communication network node cell selection bias method comprising: communicating to user equipment a control signal operable to control said user equipment to determine a maximum cell individual offset bias that said user equipment can currently support and that is specific to said user equipment for use when applying a cell bias for selecting a neighbouring cell.

The first technique recognises that where cell range expansion is used, setting a cell bias to be a constant value does not take into account differences that may arise due to changes in the traffic load at the low power node and the macro cell node. Thus, a decentralised biasing method according to which the amount of bias to be applied by user equipment can be changed in a semi-dynamic way based upon the loading of a cell or cells of the network may be preferable. Furthermore, the cell bias or cell individual offset CIO has conventionally been set to be the same for all UEs for a particular cell irrespective of the properties of the UE. Where UEs have different properties such as different antenna configurations and interference cancelling circuitry, some UEs may be better suited to an early offload to a neighbouring cell than others. EP 13306500 filed on 31 October 2013 by Alcatel Lucent Technologies recognised this problem and provided a network node that offered several different potential offset cell bias values for a cell and allowed a user equipment to select one in dependence upon its current antenna configuration.

Another alternative might be to use a technique where a maximum CIO for a UE is signalled by the UE to the network allowing the network to use appropriate UE specific CIO values. One potential problem with this is that the properties of the user equipment may change where the configuration of a user equipment changes. This change may be set by an algorithm within the user equipment that is not available to the network node. This can lead to an inappropriate cell bias being set by the network for a user equipment resulting in an inappropriate handover where the user equipment cannot handle a particular level of signal or interference.

The present technique has addressed these problems by providing a network node with the ability to communicate a control signal to user equipment indicating that the user equipment should determine a maximum cell individual offset bias itself when applying a cell bias for selecting a neighbouring cell. The individual offset bias is specific to the user equipment and can be determined by the user equipment in dependence upon a current configuration and/or current radio conditions. In this way the network node does not at this stage have visibility of the maximum cell individual offset bias for the user equipment, control of this being passed to the user equipment allowing the user equipment to determine the cell selection bias based on its current configuration and current operating conditions allowing cell selection to be performed in a way that is appropriate for that particular user equipment at that particular time.

It should be noted that the control signal might indicate that user equipment should determine and use the maximum cell individual offset bias for one particular neighbouring cell, or for a set of neighbouring cells or for all cells.

In some examples, the method comprises communicating to user equipment for at least one of a plurality of neighbouring cells, at least one cell bias value for at least one of said plurality of neighbouring cells and at least one control signal for at least one of said plurality of neighbouring cells operable to control said user equipment to determine said maximum cell individual offset bias for use when applying a cell bias for selecting said neighbouring cell.

In addition to transmitting a control signal indicating user equipment should determine the maximum cell individual offset bias, the network node may also indicate cell bias values for one or more of the neighbouring cells.

In some examples , where user equipment receives a cell bias value from the network node for a neighbouring cell along with an indication that it should determine the maximum cell individual offset bias, then in some cases it will also receive a condition which when met indicates that the user should select the maximum cell individual offset bias.

In this regard, it may be that the network node indicates that the maximum cell individual offset bias should be determined but should only be used where a particular condition or conditions is met and where they are not met the received cell bias value should be used. In this way, the network node has some control of the cell bias that is used perhaps imposing limits above or below which this bias should not fall.

In some examples, said condition comprises one of: said maximum cell individual offset bias is greater than said received cell bias value, said maximum cell individual offset bias is greater than said received cell bias value by less than a predetermined amount, and said maximum cell individual offset bias is less than said received cell bias value.

Although the condition may be a number of things, in some cases it may require the maximum cell individual offset bias to be greater than the received bias value. In this case the received bias value sets a lower limit of the cell bias that is to be used. A network node may impose this restriction where for example it is broadcasting the information to all user equipment rather than providing an indication to particular user equipment. This allows it to set a lower limit for the cell bias that should be used in the selection.

In other examples, the maximum cell individual offset bias may only be selected where it is greater than the received cell bias by less than a predetermined amount. In this case, the network node may wish to ensure that user equipment that have particularly high bias values do not use them as this would entail user equipment that are very far from the neighbouring network node connecting to it. In this regard, a user equipment may have a particularly good antenna and particularly good interference cancellation procedures and thus, may well be able to successfully connect to a neighbouring cell when the pilot power of that neighbouring cell is significantly less than the pilot power of the network node. However, it may not be advantageous for it to do so and the network node may wish to impose some limit on this.

A further condition that may be used is that the maximum cell individual offset bias is less than the received cell bias value. In this case, the received cell bias value provides an upper limit on the cell bias and this may be used, for example, where the network node is transmitting the signal to a particular user equipment with which it has a dedicated channel. It may in this case be appropriate to set an upper limit for the cell bias value that should be used.

In some examples, said cell selection bias method comprises receiving a trigger from said user equipment indicating said user equipment has met a cell selection criterion; and where said cell selection criterion has been met by applying said maximum cell individual offset bias, receiving a value indicative of said maximum cell individual offset bias.

In addition to receiving a trigger from the user equipment, the network node may receive a value indicative of the maximum cell individual offset bias where it is this bias that has been used to generate the trigger. This value can be used by the network node to determine typical offset values that generate the trigger signal.

In some examples, the method further comprises in dependence upon said value of said maximum cell individual offset bias, triggering or not triggering an event indicated by said meeting of said cell selection criterion.

In some examples the value can be used by the network node to limit the occasions that the event occurs in response to the trigger signal. In effect, if it is determined that the cell bias value that was used did not meet a certain criterion at the network node, then the event that the trigger signal generally triggers is not initiated by the network node.

It should be noted that if the network node decides on the basis of the maximum cell individual offset bias that the event should not be initiated, then in some examples it transmits a new signal to the user equipment indicating a different cell bias value that it should use. This cell bias value may be the cell bias value that is transmitted in some examples along with the signal indicating the user equipment should determine the maximum cell individual offset value, or it may be a different value.

In some examples, said step of communicating comprises one of transmitting to individual user equipment and broadcasting to user equipment within a cell network node. The communicating of the control signal and other information to the user equipment might be sent as a transmission signal to an individual user equipment or as a broadcast signal. In this regard, where the user equipment has a dedicated channel open with the network node, then generally the control signal will be transmitted to that user equipment, whereas in other embodiments where it is within the radio cell of the network node but does not have a dedicated channel, then it will receive this information as a broadcast signal.

Although the event may be a number of things, in some examples, said event comprises a handover to said neighbouring cell.

A first aspect of the present invention provides a wireless communication network user equipment cell selection bias method comprising: receiving a communication from a network node comprising a control signal operable to control said user equipment to determine a maximum cell individual offset bias specific to said user equipment for use when applying a cell bias for a neighbouring cell; and determining said maximum cell individual offset bias that said user equipment can currently support; and applying a cell selection bias in dependence upon said maximum cell individual offset bias for said neighbouring cell.

A user equipment may receive a communication from a network node that indicates that it should determine a maximum cell individual offset bias and in response to this it will determine an individual offset bias that depends upon its current configuration and the current radio conditions and will use this value when determining a cell bias to apply. In this way, the user equipment does not in this case receive a value that it should apply as a cell selection bias, but rather it receives an indication that it can itself determine which value to apply. This enables the user equipment to take account of its current configuration and operating conditions and apply a suitable value.

In some embodiments, the user equipment does receive some cell bias values relating to neighbouring cells and in some cases it also receives an indication that it should use its own maximum cell individual offset bias that it can determine is appropriate for the current time. In some cases, it will also receive a condition that should be met if it is to use its own maximum cell individual offset bias rather than the received bias values. In this regard, the network node does not have visibility of the maximum individual offset bias of the user equipment at this point and although it may wish to take account of this value when determining an appropriate cell offset bias it may wish to set limits on which offset biases are used and thus, it can communicate a condition and only if this condition is met will the user equipment use its maximum cell individual offset bias and where the condition is not met, it will use the received or reference value.

In some embodiments, said condition comprises one of: said maximum cell individual offset bias is greater than said received cell bias value, said maximum cell individual offset bias is greater than said received cell bias value by less than a predetermined amount, and said maximum cell individual offset bias is less than said received cell bias value.

In some embodiments, the method comprises in response to said user equipment determining it has met a cell selection criterion: transmitting a trigger to said network node and where said applied cell selection bias comprises said maximum cell individual offset bias, transmitting said maximum cell individual offset bias.

Where the user equipment determines it has met a cell selection criterion having applied a cell bias, then if the cell bias it applies was its own maximum cell individual offset bias, it will transmit this together with a trigger to the network node. In this regard, the network node was unaware of what the user equipment maximum cell individual offset bias is until receipt of the value, receipt of the value allows it to have some control as to whether or not it reacts to the trigger in dependence upon this value.

In other embodiments, the method comprises in response to said user equipment determining it has met a cell selection criterion: initiating a reselection of said neighbouring cell.

User equipment may itself initiate cell reselection to a neighbouring cell when it determines it has met the cell selection criterion. This may be the case where the user equipment does not have a dedicated channel to the network node but has a forward access channel or paging channel connection.

A second aspect of the present invention provides user equipment comprising: a receiver configured to receive a control signal from a network node controlling said user equipment to determine a maximum cell individual offset bias specific to said user equipment when applying a cell bias for a neighbouring cell; and determining circuitry configured to determine said maximum cell individual offset bias that said user equipment can currently support; and control circuitry configured to apply a cell selection bias in dependence upon said maximum cell individual offset bias for said neighbouring cell.

A third aspect of the present invention provides a computer program comprising executable code which when executed by a computer in a user equipment is operable to control said user equipment to perform steps in a method according to a first aspect.

Further particular and preferred aspects are set out in the accompanying independent and dependent claims. Features of the dependent claims may be combined with features of the independent claims as appropriate, and in combinations other than those explicitly set out in the claims. Similarly, features and embodiments described in relation to one aspect may be combined with other aspects as appropriate, and in combinations other than those explicitly set out above.

Where an apparatus feature is described as being operable to provide a function, it will be appreciated that this includes an apparatus feature which provides that function or which is adapted or configured to provide that function.

## BRIEF DESCRIPTION OF THE DRAWINGS

Embodiments of the present invention will now be described further, with reference to the accompanying drawings, in which:

Figure 1 schematically shows signals transmitted between a network node and a user equipment according to an embodiment of the present invention;
Figure 2 illustrates user equipment in two different cell range expansion regions of a small cell in a HetNet; and
Figure 3 shows signals transmitted between a network node and user equipment according to an embodiment of the present invention;
Figure 4 shows a flow diagram illustrating steps in a method performed by a user equipment according to an embodiment of the present invention; and
Figure 5 shows a flow diagram illustrating steps in a method performed by a user equipment during cell reselection according to an embodiment of the present invention.

## DESCRIPTION OF THE EMBODIMENTS

Before discussing the embodiments in any more detail, first an overview will be provided.

Embodiments of the invention seek to implement a cell range expansion CRE solution for heterogeneous networks that places the emphasis on the UE to determine a suitable maximum cell individual offset maxCIO bias, to use that is appropriate to its own specific current operation condition, rather than requiring the network to determine these values. Such a solution recognises that the maxCIO value that a UE can support is likely to vary as the configuration of a UE varies and hence implementing the proposed solution would eliminate or at least reduce issues associated with a change of receiver capability in the UE.

The solution removes the need for the network to calculate specific CIO values on the basis of a maxCIO values signalled to it by a UE, instead the solution allows the UE to determine a value for maxCIO which takes into account the current radio conditions that the UE is experiencing and hence the UE configuration it is using when performing measurements. Hence the solution implies that the UE ensures adequate control channel and data reception performance at that CIO value when triggering an event towards the network or when performing cell reselection.

In an embodiment the UE is configured by the network to 'use its maxCIO' value when performing measurements to determine particular events such as handovers. The indication to perform in this way is provided to the UE as part of the measurement quantities in a RRC measurement control message sent from the network to the UE. A UE that is capable of using a maximum CIO value, then uses its internal maxCIO value as the cell bias value used in the triggering of the configured event. The actual value of maxCIO takes into account the configuration of the UE at the time is it performing measurements for the event, for example the number of antennas at the UE Rx and the Blind interference cancellation capability of the UE.

In a further embodiment, the RRC measurement report sent by the UE in response includes the actual maxCIO value that the UE used when triggering the measurement report, so that the network is able to use this value to determine typical CIO values that UEs require to trigger the configured event such as a handover. The signalled maxCIO value can be used by the network to determine whether to handover the UE to a neighbouring network such as an LPN. This maybe done in dependence upon particular conditions, thus the max CIO may be compared against a reference CIO value and where the comparison meets particular conditions the handover may be initiated and where not then it may not proceed and a signal may be sent to the UE indicating a cell bias that it should use to trigger the event.

In additional embodiments the solution allows a UE to only use a maxCIO value if it meets certain criteria for example if the max CIO value is less than a network signalled cell bias value. For example, if the maxCIO value determined by a UE was 9dB, but the network had chosen not to bias UEs towards an LPN by such a large amount the network will have indicated to 'only use maxCIO if it is less than 6dB', then the UE will in this case discard the indication to 'use maxCIO', and will instead use a cell bias value of 6dB.

In another embodiment, a criterion that takes into account the maxCIO value is used in cell reselection controlled by the user equipment when it does not have a dedicated control channel. In the current system, the network broadcasts a Neighbour Cell List containing CIO values for each neighbour cell ID for use in cell reselection. The UE that is not in CELL_DCH (dedicated channel), (i.e. is in CELL_FACH (forward access channel), CELL_PCH (paging channel)) would read the Neighbour Cell List and apply the associated CIO value in performing cell reselection. The network can indicate (e.g. via SIBs) whether the UE should also take into account its maxCIO value. For example, the UE will use its maxCIO value for cell reselection if its maxCIO value is larger than the CIO value broadcast in the Neighbour Cell List.

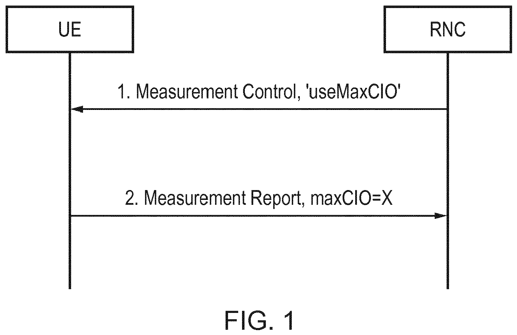

Figure 1 schematically shows signals that are sent from a network to a user equipment. The RNC radio network control node transmits a measurement control signal to a user equipment indicating to the UE that it can use a configured maxCIO value when taking measurements to trigger a configured event of indicating a handover towards an LPN cell.

In Figure 1, the following steps are shown for configuring and reporting maxCIO

1. The network informs the UE in an RRC measurement control message to use the max CIO. It should be appreciated that this is an indication to use the value determined by the UE and not an actual value.
The user equipment will then proceed to use this maximum CIO value as a cell bias value and where measurements indicate that a trigger condition is met, a trigger signal indicating this to the network node in a measurement report along with the maximum value is sent in step 2, below.
2. The UE triggers the event based on its own internal 'maxCIO' and the RRC measurement report includes the value of CIO that it has used.

The equation below shows a triggering condition for the measurement quantities for event 1a when a cell in this case the low power node is added to the UE's active set.

$$10 \cdot LogM_{New} + CIO_{New} \geq W \cdot 10 \cdot Log\left(\sum_{i=1}^{N_A} M_i\right) + (1-W) \cdot 10 \cdot LogM_{Best} - (R_{1a} - H_{1a}/2),$$

Where MNew is the measurement result of the cell entering the reporting range.
$CIO_{New}$ is the individual cell offset for the cell entering the reporting range if an individual cell offset is stored for that cell. Otherwise it is equal to 0.
$M_i$ is a measurement result of a cell not forbidden to affect reporting range in the active set.
$N_A$ is the number of cells not forbidden to affect reporting range in the current active set.
$M_{Best}$ is the measurement result of the cell not forbidden to affect reporting range in the active set with the highest measurement result, not taking into account any cell individual offset.
W is a parameter sent from UTRAN to UE.
R1a is the reporting range constant.
$H_{1a}$ is the hysteresis parameter for the event 1a.

In an embodiment of the present invention the equation on the UE is modified to take into account the MaxCIO the UE is capable of using maxCIO in place of $CIO_{New}$, i.e. $CIO_{New} = maxCIO$

The network node can then determine using the received maximum value whether the event that the user equipment believes is being triggered should indeed be initiated. This is described in more detail with reference to later embodiments.

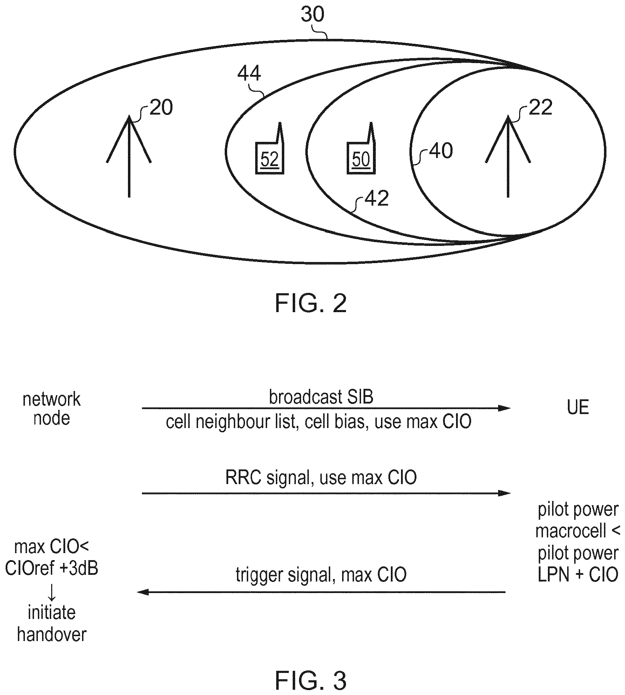

Figure 2 shows a wireless telecommunications network having a macrocell base station 20 which provides radio coverage within a macrocell 30 and a small cell base station 22 which provides radio coverage within a small cell 40. This small cell can be extended using embodiments of the invention to provide radio coverage within an extended small cell 42 or within a further extended small cell 44.

In this embodiment, user equipment 50 is shown within extended small cell 42, while user equipment 52 is shown within a further extended small cell 44.

Macrocell base station 20 transmits a signal to user equipment 50, with which it is connected and has a dedicated channel, indicating that it should use its maximum cell individual offset as a cell bias when determining when to handover to small cell base station 22. In this case, the maximum cell individual offset of user equipment 50 is a 7 dB offset and thus, it will bias the power of the pilot signal it receives from base station 22 by 7dBs. It will then compare this value with the power of other pilot signals it receives including that from the macro cell base station 20. When it determines from the measurements that certain cell reselection criteria are met, it will transmit a trigger signal to the macrocell base station 20 along with a value of the maximum cell individual offset, that is 7dB.

The base station 20 will then receive this signal and determine whether a handover to the small cell 40 should occur and if so, it will initiate this handover. Thus, in this embodiment when user equipment 50 is within extended cell 42 which corresponds to a 7dB offset bias, a handover will occur. In this regard in some cases base station 20 will have a maximum offset bias that it allows to trigger a handover, and where the maxCIO value associated with a trigger is larger than this value then the base station will not initiate a handover but will rather transmit the maximum allowed offset to the user equipment which will then use this as its cell bias in its measurements.

User equipment 52 does not currently have a dedicated channel connection with base station 20. However, it is within radio cell 30 and currently has a CELL_FACH that is a forward access channel to this base station 20. In this case, user equipment 52 receives system information blocks (SIBS) broadcast by base station 20 which indicate cell biases for neighbouring cells and where the user equipment should use its own maximum cell individual offset bias. In this case, it indicates that for small cells 22 user equipment 52 should use its maxCIO bias.

User equipment 52 has a blind interference capability and an improved antenna when compared to user equipment 50 and thus, its maximum CIO is 9 dBs. It therefore applies this cell bias to the pilot power of the small base station 22 and the resulting coverage of the extended small cell 44 is larger than the extended coverage of the small cell 42. When user equipment 52 determines that the pilot power of the small base station 22 with the applied offset of 9 dBs when compared with the pilot power of the macrocell base station 20 is such as to meet cell reselection criteria, it will itself reselect the small cell 22 and will hand over its CELL_FACH connection to that cell.

Figure 3 schematically illustrates signals transmitted by network node 20 to user equipment. Network node 20 broadcasts a signal to user equipment within its radio cell 30, the broadcast signal comprising master information blocks (MIBS) and system information blocks (SIBS). In this embodiment, the system information blocks include cell neighbour lists which contain information about neighbouring cells such as small cell 22 and cell biases that can be used to extend the coverage of these cells. It also contains a signal indicating where the maximum cell individual offset bias appropriate to a particular UE should be used rather than the cell bias provided by the system information block. In this regard, in some embodiments, the SIB may contain a condition indicating when the cell bias of the neighbour list should be used and when the maximum cell bias of the user equipment should be used. The condition may for example, contain an indication that only if the maximum cell bias is greater than the reference cell bias by less than a certain amount should the maximum cell bias be used. In this regard, although some user equipment may have very good interference cancelling capabilities and particularly good aerials, the system may decide that it is not advantageous if the small cell is extended by too much and thus, it may limit the maximum cell individual offset that a user equipment should use. In other cases, other conditions may be applied.

In addition to broadcasting system information blocks which are used by user equipment within the radio cell which do not have a dedicated link, for example, those with CELL_FACH or forward access links and CELL_PCH or paging links, the network node will transmit to user equipment having dedicated links CELL_DCH, radio resource connection (RRC) signals. These RRC signals may include a control signal indicating that a user equipment should use its maximum CIO as a cell bias value. A user equipment with a dedicated link to the base station such as user equipment 50 of Figure 2 will receive such a signal and will apply the bias of the maxCIO to the pilot power of the small cell and when it determines that this is greater than the pilot power of the macrocell, it will transmit a trigger signal to the network node along with the maxCIO value. In this case, where there is a dedicated channel connection then the network node will control the handover to the small cell and thus, it will receive the trigger signal and will determine from the maximum CIO whether it will allow the handover to proceed or not. If it determines that the handover should happen, then it will initiate the handover. In this embodiment, it will allow the handover where the maximum CIO is not greater than the reference CIO for that cell by more than 3 dBs.

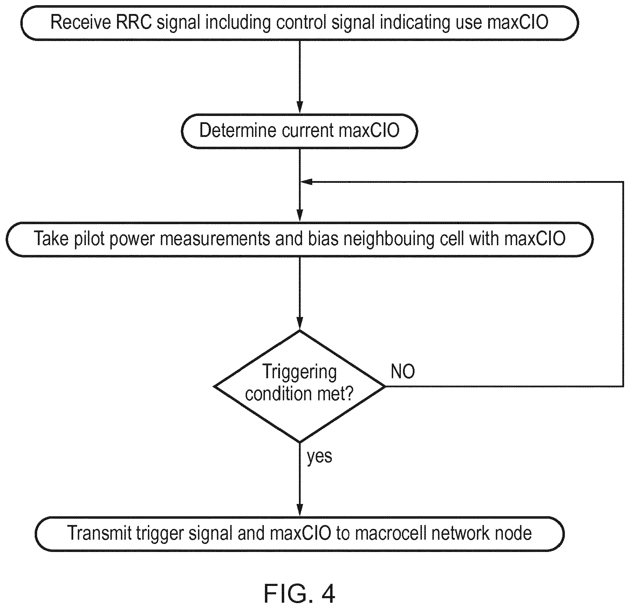

Figure 4 shows a flow diagram illustrating steps in a method performed at a user equipment according to an embodiment of the present invention. The user equipment has a dedicated channel with a network node of a macro cell and it receives a radio resource connection signal which indicates that it should use its individual cell offset bias when performing measurements to determine when to perform a handover with neighbouring small cells. Thus, the user equipment will determine its current maximum individual offset bias which will depend on current operating conditions such as its current antenna configuration and the current radio conditions and it will then measure the pilot power of the macrocell with which it is currently connected and the pilot power of a neighbouring cell or cells. It will apply a cell bias of the determined maximum CIO to the neighbouring cells where they are small cells and will compare the biased value with those of other cells including the macro cell and determine when a triggering condition is met. When this occurs, it will transmit a trigger signal along with this maximum CIO value to the macrocell network node which will then determine whether to initiate a handover or not.

In this regard, where the macrocell determines that no handover should occur owing to the value of the maximum CIO, in some embodiments, it will transmit to the user equipment a cell bias value that it should use to generate a trigger signal. For example, where the macrocell network node is operating under conditions where it does not wish handovers to occur if the cell bias is more than 3 dBs higher than a reference cell bias, then where the maxCIO is greater than this the network node will transmit the reference cell bias and the 3dB offset to the user equipment which will then use these values in its measurements and will transmit a trigger signal when the pilot power of the small cell increased by the transmitted cell bias plus 3dBs, is greater than the pilot power of the macrocell.

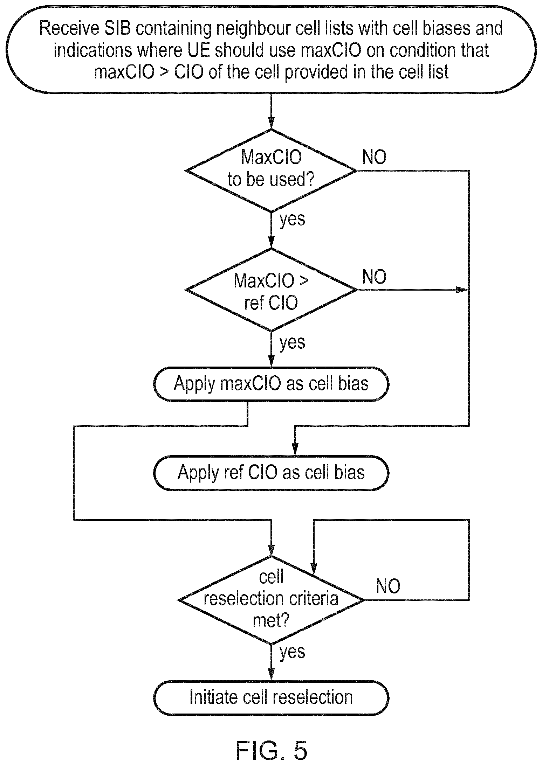

Figure 5 shows steps in a method performed by a user equipment according to a further embodiment of the present invention. This user equipment does not have a dedicated channel connection to the network node but is in a lower power mode and is within the macro cell and can receive paging messages. It will therefore receive SIBs broadcast by the macrocell network node and these will contain cell lists indicating cell biases to be applied to neighbouring small cells and indications where the user equipment should use its own maximum cell individual offset bias, in this case on the condition that the maximum cell indication offset bias is greater than the cell bias of the cell list.

Thus, the user equipment will determine if for a neighbouring cell the SIB indicated that its own maximum CIO should be used and if it does, it will determine if its own maximum CIO is greater than the reference CIO. If it is, then it will apply its own maximum CIO as a cell bias and will determine whether it should initiate a cell reselection by comparing the cell biased pilot signal of the neighbouring cell with the macrocell pilot signal.

If it determines from the SIB that it should not use its own maximum CIO, or if its maximum CIO is not greater than the reference CIO, then it will apply the reference CIO as the cell bias to the pilot signal of the small cell and will determine using these values when the cell reselection criteria are met. When this occurs, it will initiate a cell reselection.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

**Claims**

1. A wireless communication network user equipment cell selection bias method comprising:

   receiving a communication from a network node (20) comprising a control signal operable to control said user equipment to determine a maximum cell individual offset bias specific to said user equipment (50, 52) for use when applying a cell bias for a neighbouring cell; and

determining said maximum cell individual offset bias that said user equipment can currently support; and

applying a cell selection bias in dependence upon said maximum cell individual offset bias for said neighbouring cell.

2. A wireless communication network user equipment cell selection bias method according to claim 1, comprising:

receiving at least one cell bias value for at least one of a plurality of neighbouring cells; and

receiving at least one control signal for at least one of said plurality of neighbouring cell operable to control said user equipment to determine a maximum cell individual offset bias specific to said user equipment for said corresponding neighbouring cell; and

where said user equipment receives for a same neighbouring cell said control signal and said cell bias value, comparing said maximum cell individual offset bias and said received cell bias value and in dependence upon a condition relating to said comparison being met, selecting said maximum cell individual offset bias; and

applying said selected cell bias value.

3. A wireless communication network user equipment cell selection bias method according to claim 1 or 2, wherein said condition comprises one of: said maximum cell individual offset bias is greater than said received cell bias value, said maximum cell individual offset bias is greater than said received cell bias value by less than a predetermined amount, and said maximum cell individual offset bias is less than said received cell bias value.

4. A wireless communication network user equipment cell selection bias method according to any one of claims 1 to 3, comprising:

in response to said user equipment (50, 52) determining it has met a cell selection criterion:

transmitting a trigger to said network node and where said applied cell selection bias comprises said maximum cell individual offset bias, transmitting said maximum cell individual offset bias.

5. A wireless communication network user equipment cell selection bias method according to any one of claims 1 to 3, comprising:

in response to said user equipment determining it has met a cell selection criterion:

initiating a cell reselection to said neighbouring cell.

6. A computer program comprising executable code which when executed by a computer in a user equipment is operable to control said user equipment to perform steps in a method according to any one of claims 1 to 5.

7. User equipment (50, 52) comprising:

a receiver configured to receive a control signal from a network node (20) operable to control said user equipment to determine a maximum cell individual offset bias specific to said user equipment for use when applying a cell bias for a neighbouring cell; and

determining circuitry configured to determine said maximum cell individual offset bias that said user equipment can currently support; and

control circuitry configured to apply a cell selection bias in dependence upon said maximum cell individual offset bias for said neighbouring cell.

**Patentansprüche**

1. Verfahren zur Beeinflussung der Zellenauswahl eines Benutzergeräts in einem Drahtloskommunikationsnetzwerk, das von einem Benutzergerät (50, 52) ausgeführt wird, wobei das Verfahren Folgendes umfasst:

Empfangen einer Nachricht von einem Netzwerkknoten (20), die ein Steuersignal umfasst, das dazu betreibbar ist, das Benutzergerät (50, 52) zum Bestimmen eines maximalen individuellen Zellenoffsets, der für das Benutzergerät (50, 52) zur Verwendung beim Anwenden einer Zellenbeeinflussung für eine benachbarte Zelle (22) spezifisch ist, zu steuern; und

Bestimmen der maximalen individuellen Zellenoffsetbeeinflussung, die das Benutzergerät (50,52) derzeit unterstützen kann; und

Anwenden einer Zellenauswahlbeeinflussung in Abhängigkeit von der maximalen individuellen Zellenoffsetbeeinflussung für die benachbarte Zelle (22) .

**2.** Verfahren zur Beeinflussung der Zellenauswahl eines Benutzergeräts in einem Drahtloskommunikationsnetzwerk nach Anspruch 1, umfassend:

Empfangen von mindestens einem Zellenbeeinflussungswert für mindestens eine von einer Vielzahl benachbarter Zellen; und
Empfangen von mindestens einem Steuersignal für mindestens eine der Vielzahl von benachbarten Zellen, das dazu betreibbar ist, das Benutzergerät zum Bestimmen einer maximalen individuellen Zellenoffsetbeeinflussung, die für das Benutzergerät für die entsprechende benachbarte Zelle spezifisch ist, zu steuern; und
wobei das Benutzergerät für eine gleiche benachbarte Zelle den Steuersignal und den Zellenbeeinflussungswert empfängt, die maximale individuelle Zellenoffsetbeeinflussung und den empfangenen Zellenbeeinflussungswert vergleicht und in Abhängigkeit davon, ob eine Bedingung bezüglich des Vergleichs erfüllt wird, die maximale individuelle Zellenoffsetbeeinflussung auswählt; und
Anwenden des ausgewählten Zellenbeeinflussungswerts.

**3.** Verfahren zur Beeinflussung der Zellenauswahl eines Benutzergeräts in einem Drahtloskommunikationsnetzwerk nach Anspruch 2, wobei die Bedingung eine der folgenden Bedingungen umfasst:
die maximale individuelle Zellenoffsetbeeinflussung ist größer als der empfangene Zellenbeeinflussungswert, die maximale individuelle Zellenoffsetbeeinflussung ist um weniger als einen vorbestimmten Betrag größer als der empfangene Zellenbeeinflussungswert, und die maximale individuelle Zellenoffsetbeeinflussung ist kleiner als der empfangene Zellenbeeinflussungswert.

**4.** Verfahren zur Beeinflussung der Zellenauswahl eines Benutzergeräts in einem Drahtloskommunikationsnetzwerk nach einem der Ansprüche 1 bis 3, umfassend:
als Reaktion darauf, dass das Benutzergerät (50, 52) bestimmt, dass es ein Zellenauswahlkriterium erfüllt hat:
Übertragen eines Auslösers an den Netzwerkknoten, und wo die angewendete Zellenauswahlbeeinflussung die maximale individuelle Zellenoffsetbeeinflussung umfasst, Übertragen der maximalen individuellen Zellenoffsetbeeinflussung.

**5.** Verfahren zur Beeinflussung der Zellenauswahl eines Benutzergeräts in einem Drahtloskommunikationsnetzwerk nach einem der Ansprüche 1 bis 3, umfassend:
als Reaktion darauf, dass das Benutzergerät bestimmt, dass es ein Zellenauswahlkriterium erfüllt hat:
Einleiten einer Zellen-Neuauswahl zur benachbarten Zelle.

**6.** Computerprogramm, umfassend ausführbaren Code, der, wenn er von einem Computer in einem Benutzergerät (50, 52) ausgeführt wird, dazu betreibbar ist, das Benutzergerät zum Ausführen von Schritten in einem Verfahren nach einem der Ansprüche 1 bis 5 zu steuern.

**7.** Benutzergerät (50, 52), umfassend:

einen Empfänger, der dafür ausgelegt ist, ein Steuersignal von einem Netzwerkknoten (20) zu empfangen, das dazu betreibbar ist, das Benutzergerät (50, 52) zum Bestimmen einer maximalen individuellen Zellenoffsetbeeinflussung, die für das Benutzergerät (50, 52) zur Verwendung beim Anwenden einer Zellenbeeinflussung für eine Nachbarzelle (22) spezifisch ist, zu steuern; und
Bestimmungsschaltungsanordnung, die dafür ausgelegt ist, die maximale individuelle Zellenoffsetbeeinflussung, die das Benutzergerät (50, 52) derzeit unterstützen kann, zu bestimmen; und
Steuerschaltungsanordnung, die dafür ausgelegt ist, eine Zellenauswahlbeeinflussung in Abhängigkeit von der maximalen individuellen Zellenoffsetbeeinflussung für die benachbarte Zelle (22) anzuwenden.

**Revendications**

**1.** Procédé à biais de sélection de cellule pour équipement utilisateur dans un réseau de communication sans fil, exécuté par un équipement utilisateur (50, 52), le procédé comprenant :

la réception d'une communication en provenance d'un nœud (20) de réseau comprenant un signal de commande apte à commander audit équipement utilisateur (50, 52) de déterminer un biais de décalage individuel de cellule maximal propre audit équipement utilisateur (50, 52) en vue de son utilisation lors de l'application d'un biais de cellule pour une cellule voisine (22) ; et

la détermination dudit biais de décalage individuel de cellule maximal actuellement compatible avec ledit équipement utilisateur (50, 52) ; et

l'application d'un biais de sélection de cellule en fonction dudit biais de décalage individuel de cellule maximal pour ladite cellule voisine (22).

2. Procédé à biais de sélection de cellule pour équipement utilisateur dans un réseau de communication sans fil selon la revendication 1, comprenant :

la réception d'au moins une valeur de biais de cellule pour au moins une d'une pluralité de cellules voisines ; et la réception d'au moins un signal de commande pour au moins une de ladite pluralité de cellules voisines apte à commander audit équipement utilisateur de déterminer un biais de décalage individuel de cellule maximal propre audit équipement utilisateur pour ladite cellule voisine correspondante ; et lorsque ledit équipement utilisateur reçoit, pour une même cellule voisine, ledit signal de commande et ladite valeur de biais de cellule, la comparaison dudit biais de décalage individuel de cellule maximal et ladite valeur de biais de cellule reçue et, selon qu'une condition liée à ladite comparaison est satisfaite, la sélection dudit biais de décalage individuel de cellule maximal ; et l'application de ladite valeur de biais de cellule sélectionnée.

3. Procédé à biais de sélection de cellule pour équipement utilisateur dans un réseau de communication sans fil selon la revendication 2, dans lequel ladite condition comprend l'une des conditions suivantes : ledit biais de décalage individuel de cellule maximal est supérieur à ladite valeur de biais de cellule reçue, ledit biais de décalage individuel de cellule maximal est supérieur de moins d'une quantité prédéterminée à ladite valeur de biais de cellule reçue, et ledit biais de décalage individuel de cellule maximal est inférieur à ladite valeur de biais de cellule reçue.

4. Procédé à biais de sélection de cellule pour équipement utilisateur dans un réseau de communication sans fil selon l'une quelconque des revendications 1 à 3, comprenant : en réponse à la détermination, par ledit équipement utilisateur (50, 52), qu'il a rempli un critère de sélection de cellule : la transmission d'un déclencheur audit nœud de réseau et, lorsque ledit biais de sélection de cellule appliqué comprend ledit biais de décalage individuel de cellule maximal, la transmission dudit biais de décalage individuel de cellule maximal.

5. Procédé à biais de sélection de cellule pour équipement utilisateur dans un réseau de communication sans fil selon l'une quelconque des revendications 1 à 3, comprenant : en réponse à la détermination, par ledit équipement utilisateur, qu'il a rempli un critère de sélection de cellule : le déclenchement d'une resélection de cellule sur ladite cellule voisine.

6. Programme d'ordinateur comprenant un code exécutable qui, lorsqu'il est exécuté par un ordinateur dans un équipement utilisateur (50, 52), est apte à commander audit équipement utilisateur de réaliser des étapes dans un procédé selon l'une quelconque des revendications 1 à 5.

7. Équipement utilisateur (50, 52), comprenant :

un récepteur configuré pour recevoir un signal de commande en provenance d'un nœud (20) de réseau apte à commander audit équipement utilisateur (50, 52) de déterminer un biais de décalage individuel de cellule maximal propre audit équipement utilisateur (50, 52) en vue de son utilisation lors de l'application d'un biais de cellule pour une cellule voisine (22) ; et une circuiterie de détermination configurée pour déterminer ledit biais de décalage individuel de cellule maximal actuellement compatible avec ledit équipement utilisateur (50, 52) ; et une circuiterie de commande configurée pour appliquer un biais de sélection de cellule en fonction dudit biais de décalage individuel de cellule maximal pour ladite cellule voisine (22).

FIG. 1

FIG. 2

network
node

broadcast SIB

cell neighbour list, cell bias, use max CIO

UE

RRC signal, use max CIO

max CIO<
CIOref +3dB
↓
initiate
handover

trigger signal, max CIO

pilot power
macrocell <
pilot power
LPN + CIO

FIG. 3

Receive RRC signal including control signal indicating use maxCIO

Determine current maxCIO

Take pilot power measurements and bias neighbouing cell with maxCIO

Triggering condition met?

NO

yes

Transmit trigger signal and maxCIO to macrocell network node

FIG. 4

Receive SIB containing neighbour cell lists with cell biases and indications where UE should use maxCIO on condition that maxCIO > CIO of the cell provided in the cell list

MaxCIO to be used? — NO

yes

MaxCIO > ref CIO — NO

yes

Apply maxCIO as cell bias

Apply ref CIO as cell bias

cell reselection criteria met? — NO

yes

Initiate cell reselection

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13306500 A

**Non-patent literature cited in the description**

- **KATSUNORI KIKUCCHI et al.** Proposal of Adaptive Control CRE in Heterogeneous Networks. *2012 IEEE 23rd International Symposium on personal, Indoor and Mobile Radio Communications,* 910-914

- **ALCATEL-LUCENT.** Cell Range Expansion. *3GPP Draft R2-140615,* 09 February 2014